# EUROPEAN PATENT APPLICATION

(11) **EP 1 845 352 A1**
(43) Date of publication of application: **17.10.2007**
(21) Application number: 06843563.5
(22) Date of filing: 28.12.2006
(51) Int. Cl.: G01L 3/10, G01B 7/30, G01D 5/12

(54) **DEVICE FOR DETECTING ROTATION ANGLE AND TORQUE**

(30) Priority: 05.01.2006 JP 2006000342
(71) Applicant: MATSUSHITA ELECTRIC INDUSTRIAL CO., LTD., Osaka 571-8501 (JP)
(72) Inventor: OIKE, Kouji c/o Matsushita Elec. Ind. Co., Ltd., Chuo-ku, Osaka-shi, Osaka 540-6319 (JP); UEHIRA, Kiyotaka c/o Matsushita Elec. Ind. Co., Ltd., Chuo-ku, Osaka-shi, Osaka 540-6319 (JP); SASANOUCHI, Kiyotaka c/o Matsushita Elect. Ind. Co., Ltd., Chuo-ku, Osaka-shi, Osaka 540-6319 (JP); SANTO, Kouichi c/o Matsushita Elec.Ind. Co., Ltd., Chuo-ku, Osaka-shi, Osaka 540-6319 (JP)
(74) Representative: Pautex Schneider, Nicole Véronique
(86) International application number: PCT/JP2006/326185
(87) International publication number: WO 2007/077910

(57) **Abstract**

A rotation angle and torque detection apparatus includes: a target having magnetic poles magnetized at an outer circumference face so that the magnetic poles have alternately-different polarities and the target can be rotated multiple times; and a detector that is positioned to have a fixed distance from the target in a radial direction of the target and to have a fixed distance from the center of the target in an axial direction and that is provided at a plane vertical to the radial direction of the target. This rotation angle and torque detection apparatus can sense a torque and a multiple rotation angle with high resolution and high accuracy.

## Description

### TECHNICAL FIELD

The present invention relates to a rotation angle and torque detection apparatus used for a power steering of a vehicle for example. In particular, the present invention relates to a rotation angle and torque detection apparatus that can simultaneously detect a rotation angle and a torque of a steering.

### BACKGROUND ART

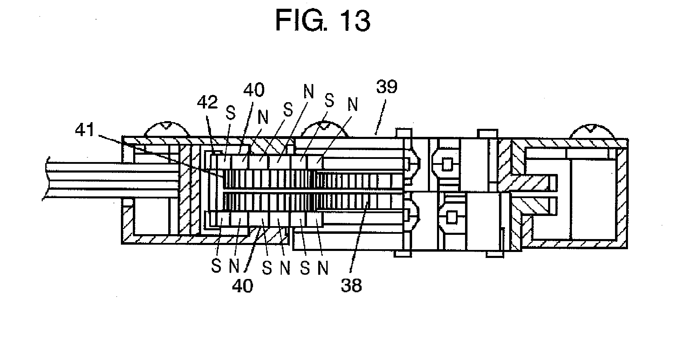

Conventionally, a method for detecting a torque and a rotation angle is disclosed in Patent Publication 1 for example. Fig. 13 is a cross-sectional view illustrating a conventional rotation angle and torque detection apparatus. In Fig. 13, gear section 38 is fixed via engagement spring 39 to a rotation axis (not shown) for which a rotation angle is desired to be detected. Gear section 38 meshes with gear section 41. Gear section 41 is attached with code plate 40 in which an end face of an outer periphery is magnetized by a plurality of magnetic poles. As the rotation axis to be detected is rotated, the magnetic poles provided at code plate 40 are moved. The number of the magnetic poles is counted by detection element 42 opposed to the end face of the outer periphery of code plate 40, thereby detecting a rotation angle. It is noted that "N" and "S" shown in Fig. 13 represent the polarity of a magnetized magnetic pole. By respectively attaching mechanisms by this structure to two shafts connected via a torsion bar, when a torque is generated between the two shafts to cause torsion therebetween, an amount of the generated torque can be detected by comparing rotation angles of the respective shafts.

However, in the case of a rotation angle and torque sensing/detection apparatus having the structure as described above, the rotation angle of the shaft is sensed by counting how many times a plurality of magnetic poles provided at the end face of the outer periphery of code plate 40 are moved and thus is disadvantageous in that a distance between magnetic poles must be reduced in order to improve the resolution of the angle sensing. Furthermore, the rotation of code plate 40 and the rotation of the shafts provided via a gear also cause a difficulty in improving the sensing accuracy due to backlash for example. Furthermore, this structure can sense only a relative rotation angle and fails to sense an angle of multiple rotations.
[Patent Publication 1] Japanese Patent Unexamined Publication No. H11-194007

### DISCLOSURE OF THE INVENTION

The present invention solves the above problem of the conventional rotation angle and torque detection apparatus. The present invention provides a rotation angle and torque detection apparatus that senses a torque and a rotation angle of multiple rotations with high accuracy and high resolution.

The rotation angle and torque detection apparatus includes: a target having magnetic poles magnetized at an outer circumference face so that the magnetic poles have alternately-different polarities and the target can be rotated multiple times; and a detector that is positioned to have a fixed distance from the target in a radial direction of the target and to have a fixed distance from the center of the target in an axial direction and that is provided at a plane vertical to the radial direction of the target.

The rotation angle and torque detection apparatus includes: a first target having magnetic poles magnetized at an outer circumference face so that the magnetic poles have alternately-different polarities and the first target can be rotated multiple times; a first rotation body that is engaged with and connected to at least one of an input axis and an output axis, that retains the first target, and that can be rotated multiple times; a first detector that is provided to have a fixed distance to the first target in a radial direction of the first target and to have a fixed distance from the center of the first target in an axial direction of the first target and that is provided at a plane vertical to a radial direction of the first target; a second target having magnetic poles magnetized at an outer circumference face so that the magnetic poles have alternately-different polarities and the second target can be rotated multiple times; a second rotation body that is engaged with and connected to the first detector and at least one of an output axis and an input axis, that retains the second target, and that can be rotated multiple times; a second detector that is provided to have a fixed distance in a radial direction of the second target and to have a fixed distance from the center of the second target in an axial direction of the second target and that is provided at a plane vertical to a radial direction of the second target; a third rotation body that is engaged with and connected to at least one of the input axis and the output axis and that has a gear; a third target that is magnetized and that can be rotated multiple times; a fourth rotation body that is provided at the gear of the third rotation body, that has the third target at the center, and that has a gear; a third detector for detecting a rotation angle of the fourth rotation body; a fourth target that is magnetized and that can be rotated multiple times; a fifth rotation body that is connected to a gear of the fourth rotation body, that has the fourth target at the center, and that has a gear; and a fourth detector for detecting a rotation angle of the fifth rotation body.

### BRIEF DESCRIPTION OF THE DRAWINGS

Fig. 1 illustrates a basic structure of a target and a detector in an embodiment of the present invention.
Fig. 2A is a side view illustrating a relative position of a detector to a target in an embodiment of the present invention.
Fig. 2B is a top view illustrating a relative position of a detector to a target in an embodiment of the present invention.
Fig. 3 illustrates a direction of a magnetic field that is positioned to be opposed to the center of the axial direction of the target and that is provided at a plane vertical to the radial direction in an embodiment of the present invention.
Fig. 4 illustrates a direction of a magnetic field that is positioned to be opposed to the edge of a target and that is provided at a plane vertical to the radial direction.
Fig. 5A is a side cross sectional view illustrating the basic structure of a rotation angle and torque detection apparatus in an embodiment of the present invention.
Fig. 5B is a top view illustrating the basic structure of a rotation angle and torque detection apparatus in an embodiment of the present invention.
Fig. 5C is a partial cross sectional view illustrating the basic structure of a rotation angle and torque detection apparatus in an embodiment of the present invention.
Fig. 6 is a circuit block diagram illustrating a rotation angle and torque detection apparatus in an embodiment of the present invention.
Fig. 7A is a waveform diagram illustrating output signals of first and second detectors in an embodiment of the present invention.
Fig. 7B is a waveform diagram illustrating electric angles of first and second detectors in an embodiment of the present invention.
Fig. 8A is a waveform diagram illustrating an output signal of the third detector in an embodiment of the present invention.
Fig. 8B is a waveform diagram illustrating an electric angle of the third detector in an embodiment of the present invention.
Fig. 9A is a waveform diagram illustrating an output signal of the fourth detector in an embodiment of the present invention.
Fig. 9B is a waveform diagram illustrating an electric angle of the fourth detector in an embodiment of the present invention.
Fig. 10A is a waveform diagram illustrating a rotation angle of the fourth rotation body used for torque detection in an embodiment of the present invention.
Fig. 10B is a waveform diagram illustrating a rotation angle of the fifth rotation body used for torque detection in an embodiment of the present invention.
Fig. 10C is a waveform diagram illustrating rotation angles calculated by signals from the third and fourth detection sections that are used for torque detection in an embodiment of the present invention.
Fig. 10D is a waveform diagram illustrating a rotation angle used for torque detection in an embodiment of the present invention.
Fig. 10E is a waveform diagram illustrating a rotation angle of the second target calculated by the second detection section that is used for torque detection in an embodiment of the present invention.
Fig. 11 is a torque detection characteristic diagram in an embodiment of the present invention.
Fig. 12 is a waveform diagram illustrating a method for preventing an error in the detection of a rotation angle in an embodiment of the present invention.
Fig. 13 is a cross-sectional view illustrating a conventional torque and rotation angle sensing apparatus.

### Reference marks in the drawings

- 1: Target
- 2: Detector
- 3: First rotation body
- 4: Input axis
- 5: First target
- 6: Second rotation body
- 7: Output axis
- 8: Second target
- 9: Torsion bar
- 10: Third rotation body
- 11: Fourth rotation body
- 12: Third target
- 13: Third detector
- 14: Fifth rotation body
- 15: Fourth target
- 16: Fourth detector
- 17: First detector
- 18: Second detector
- 19: Substrate
- 20: Substrate

### DETAILED DESCRIPTION OF THE PREFERRED EMBODIMENTS

Hereinafter, an embodiment of the present invention will be described.

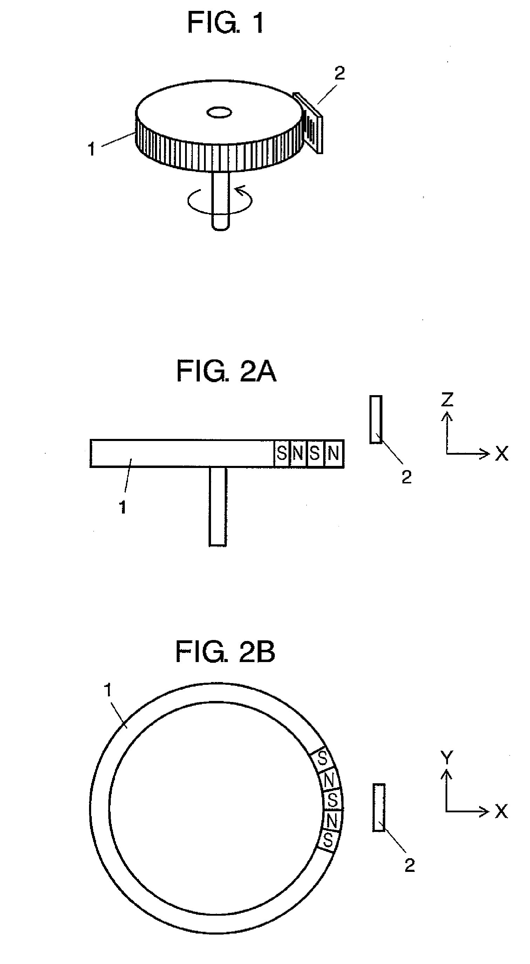

In Fig. 1, Fig. 2A, Fig. 2B, Fig. 3, and Fig. 4, target 1 includes magnetic poles that are arranged on the outer circumference face with an identical distance thereamong so that the magnetic poles have alternately-different polarities. Detector 2 is provided so as to be opposed to target 1 and detects the direction of this magnetic field. Detector 2 is composed of a magnetic detecting element for example. As shown in Fig. 2A and Fig. 2B, detector 2 is placed to have a fixed distance from target 1 in a radial direction of target 1, to have a fixed distance from the center in an axial direction of target 1, and to be in a plane vertical to the radial direction of the target 1. Hereinafter, the radial direction of target 1 will be assumed as an direction X, the axial direction of the target 1 will be assumed as a direction Z, a direction tangent to the rotation of target 1 will be assumed as a direction Y, and a plane vertical to the radial direction of target 1 will be assumed as a plane YZ.

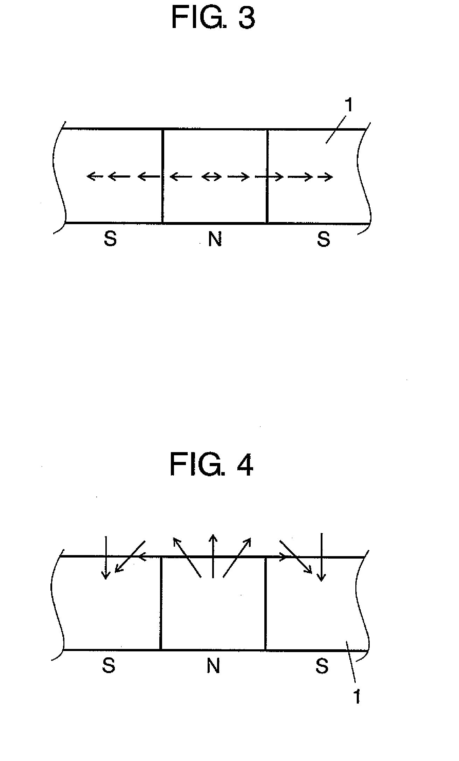

As shown in Fig. 3, at the center of target 1 in a direction of an axis Z, a position opposed to the circumference face has a magnetic field direction that changes linearly in a plane YZ. This means that detector 2 for detecting the magnetic field direction can detect only signals in two directions (0 degree or 180 degrees) and cannot detect the rotation angle of target 1 finely. It is noted that the arrows show the magnetic field directions.

When detector 2 is placed to have a fixed distance from the center in the direction Z as shown in Fig. 4 however, the magnetic field direction of the position opposed to the circumference face of target 1 is rotated in the plane YZ. Thus, detector 2 can finely detect the magnetic field direction changing depending on the rotation angle of target 1. It is noted that the arrows show the magnetic field directions. In Fig. 2A, Fig. 2B, Fig. 3, and Fig. 4, "N" and "S" represent the polarity of a magnetized magnetic pole.

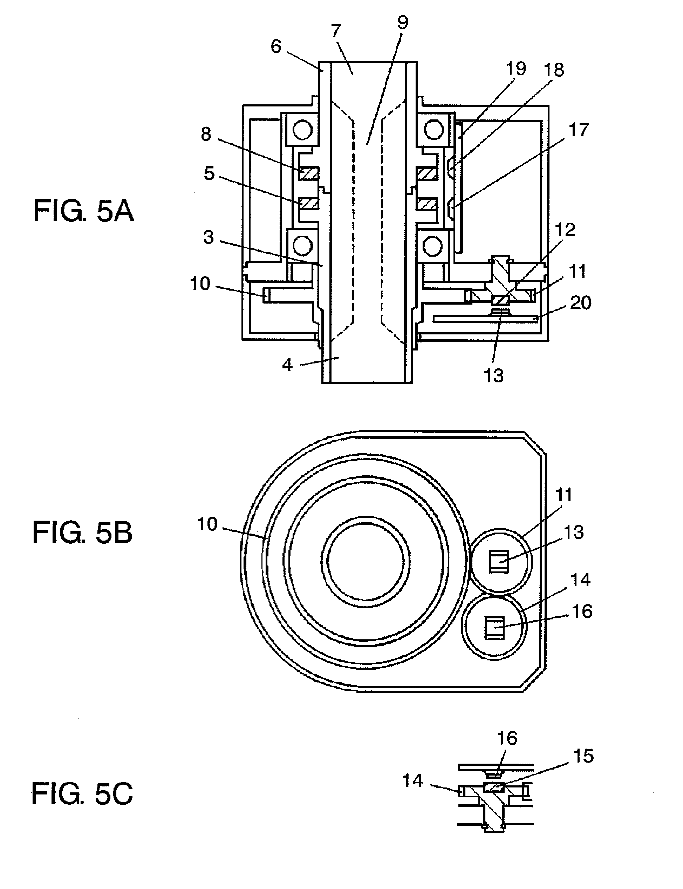

Next, in Fig. 5A, Fig. 5B, and Fig. 5C, first rotation body 3 is engaged with input axis 4 and can be rotated multiple times. First target 5 is repainted by first rotation body 3 and has an outer periphery face in which magnetic poles are arranged to have an identical distance so that the magnetic poles have alternately-different polarities. Second rotation body 6 is engaged with output axis 7 and can be rotated multiple times. Second target 8 is retained by second rotation body 6 and has an outer periphery face in which magnetic poles are arranged to have an identical distance so that the magnetic poles have alternately-different polarities. Torsion bar 9 is placed at a concentric axis of input axis 4 and output axis 7. Third rotation body 10 has a gear that is engaged with first rotation body 3 and that can be rotated multiple times. Fourth rotation body 11 is engaged with the gear of third rotation body 10. Third target 12 is placed at the center of fourth rotation body 11. Third detector 13 is positioned to be opposed to third target 12. Third detector 13 detects a direction of a magnetic field generated by third target 12. Fifth rotation body 14 is engaged with a gear of fourth rotation body 11. Fourth target 15 is placed at the center of fifth rotation body 14. Fourth detector 16 is positioned to be opposed to fourth target 15 and detects a direction of a magnetic field generated by fourth target 15. First detector 17 is positioned to be opposed to first target 5 and detects a direction of a magnetic field generated by first target 5. Second detector 18 is positioned to be opposed to second target 8 and detects a direction of a magnetic field generated by second target 8. First detector 17 and second detector 18 are placed on substrate 19. Third detector 13 and fourth detector 16 are placed on substrate 20. It is noted that third target 12 and fourth target 15 are made of a monopolar magnet for example. First detector 17, second detector 18, third detector 13, and fourth detector 16 are made of a magnetic detecting element for example.

First detector 17 opposed to first target 5 provided at first rotation body 3 is positioned so as to have a specific positional relation to first target 5 as described with reference to Fig. 1 and Fig. 2. Second detector 18 opposed to second target 8 provided at second rotation body 6 is positioned so as to have a specific positional relation to second target 8 as described with reference to Fig. 1 and Fig. 2.

First target 5 and second target 8 have an identical number of magnetized poles. The number of magnetic poles is determined based on the maximum torque detection amount and a torsion bar constant. When the maximum torque detection amount is ±8N·m and a torsion bar constant is 2N · m/degrees for example, the maximum torsion angle is ±4 degrees. The number of magnetic poles in this case is 30 (15 N poles and 15 S poles) including a margin and one pole occupies 12 degrees.

A case will be described in which first detector 17, second detector 18, third detector 13, and fourth detector 16 use a magnetic resistance element (hereinafter referred to as MR element) that is one of magnetic detecting elements. The respective MR elements sense a magnetic field direction to output an analog signal as a sinusoidal signal and a cosine signal.

When first detector 17 and second detector 18 are used to sense the change in the directions of magnetic fields of first target 5 and second target 8, a sinusoidal wave and a cosine signal of one cycle are outputted to one magnetic pole. Thus, when first target 5 and second target 8 are rotated one time, a sinusoidal wave and a cosine signal of the number of magnetized poles are detected.

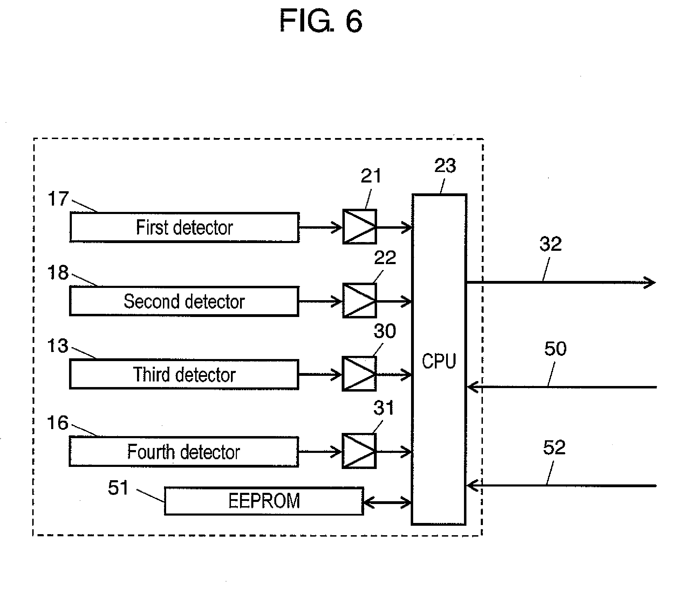

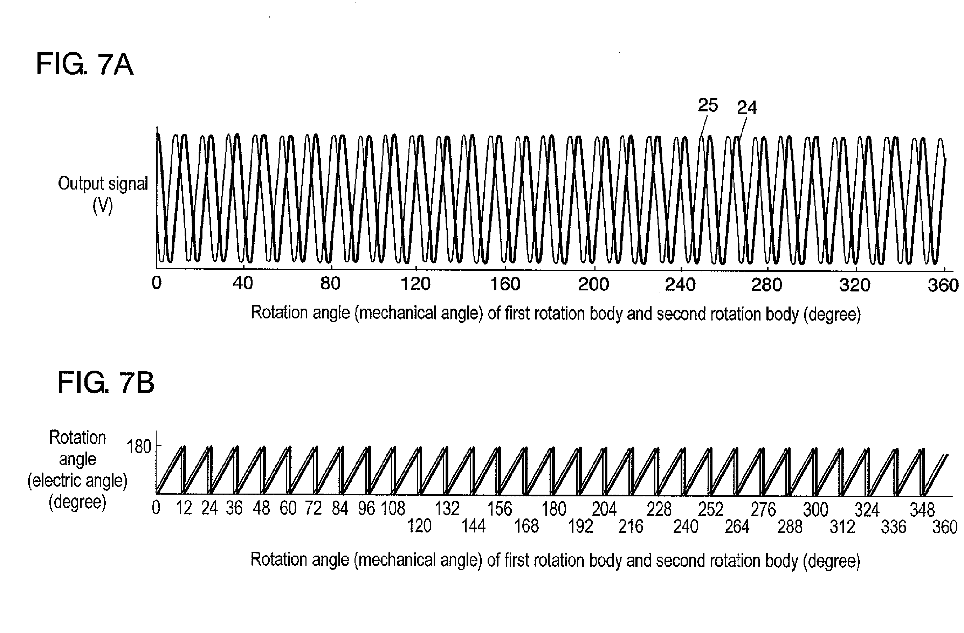

As shown in Fig. 6, output signals of first detector 17 and second detector 18 are amplified by amplifier 21 and amplifier 22 to have a specified amplitude and are inputted to an A/D converter (not shown) in microcomputer 23 (hereinafter referred to as CPU 23). CPU 23 computes these inputted signals to calculate the rotation angle of first rotation body 3 and the rotation angle of second rotation body 6, the waveforms of which are shown in Fig. 7A and Fig. 7B.

In Fig. 7A, the lateral axis represents the rotation angles of first rotation body 3 and second rotation body 6 engaged with input axis 4 and output axis 7 and the longitudinal axis represents sinusoidal signal 24 and cosine signal 25 from first detector 17 and second detector 18. In Fig. 7B, the lateral axis represents the rotation angles of first rotation body 3 and second rotation body 6 and the longitudinal axis represents the rotation angle of first rotation body 3 and the rotation angle of second rotation body 6 calculated by CPU 23 based on sinusoidal signal 24 and cosine signal 25.

On the other hand, the gear of fourth rotation body 11 is connected to the gear of third rotation body 10 and is rotated based on a speed ratio determined by a teeth number ratio between fourth rotation body 11 and third rotation body 10.

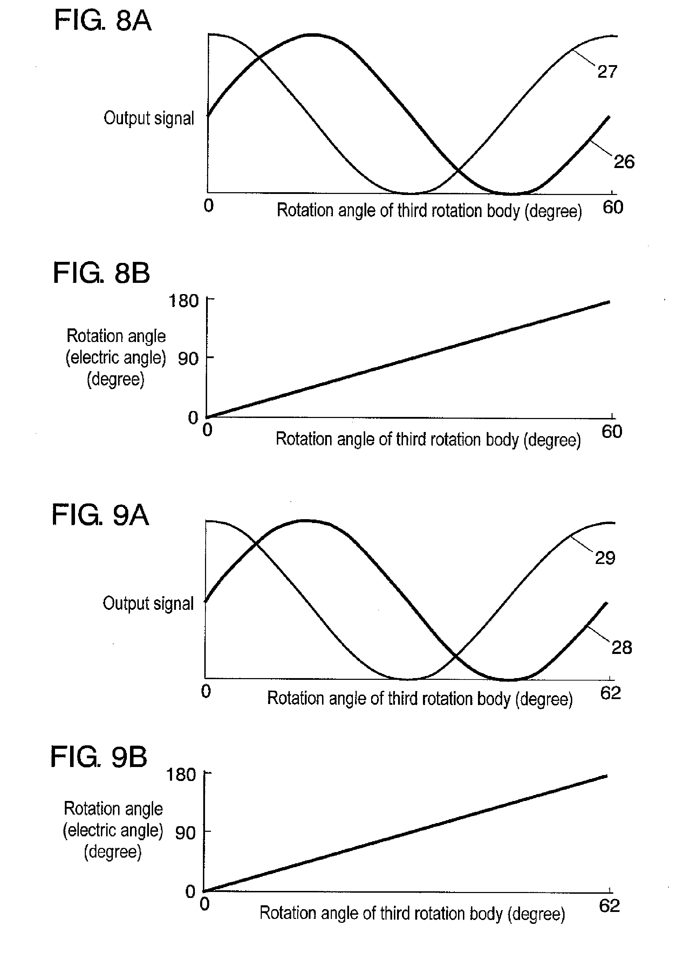

Third detector 13 senses the magnetic field direction of third target (monopolar magnet) 12 to output, with regards to 0.5 rotation of third target 12, a sinusoidal wave and a cosine signal of one cycle. CPU 23 computes this output to calculate the rotation angle of fourth rotation body 11, the waveforms of which are shown in Fig. 8A and Fig. 8B.

In Fig. 8A, the lateral axis represents the rotation angle of third rotation body 10 and the longitudinal axis represents sinusoidal signal 26 and cosine signal 27 from third detector 13. In Fig. 8B, the lateral axis represents the rotation angle of third rotation body 10 and the longitudinal axis represents the rotation angle (electric angle) of fourth rotation body 11 computed by CPU 23 based on sinusoidal signal 26 and cosine signal 27.

The gear of fifth rotation body 14 is connected, via the gear of fourth rotation body 11, to third rotation body 10. When third rotation body 10 is rotated, fifth rotation body 14 is rotated at a speed ratio determined based on the ratio among the teeth numbers of the respective gears.

Fourth detector 16 senses the magnetic field direction of fourth target 15 to output, with regards to 0.5 rotation of fourth target 15, a sinusoidal wave and a cosine signal of one cycle. CPU 23 computes this output to calculate the rotation angle of fifth rotation body 14, the waveforms of which are shown in Fig. 9A and Fig. 9B.

In Fig. 9A, the lateral axis represents the rotation angle of third rotation body 10 and the longitudinal axis represents sinusoidal signal 28 and cosine signal 29 from fourth detector 16. In Fig. 9B, the lateral axis represents the rotation angle of third rotation body 10 and the longitudinal axis represents the rotation angle (electric angle) of fifth rotation body 14 computed by CPU 23 based on sinusoidal signal 28 and cosine signal 29.

In Fig. 6, an output signal of third detector 13 is connected to CPU 23 via amplifier 30. An output signal of fourth detector 16 is connected to CPU 23 via amplifier 31. The rotation angle and torque calculated by CPU 23 on the other hand are outputted from output signal line 32.

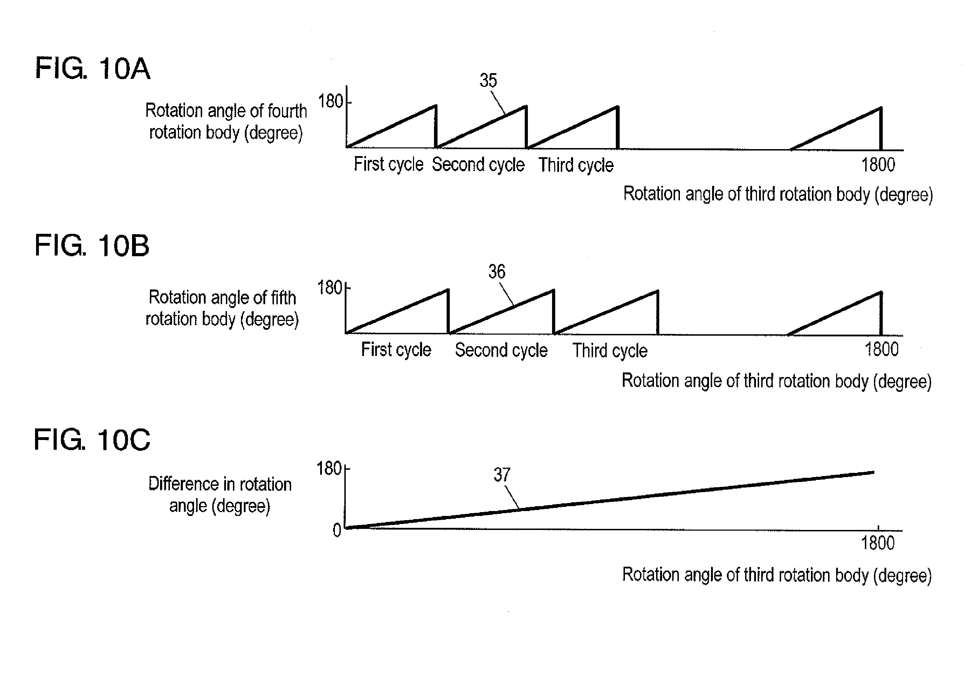

Next, in Fig. 10A, the lateral axis represents a rotation angle of third rotation body 10 engaged with input axis 4 and the longitudinal axis represents the rotation angle of fourth rotation body 11 calculated based on a signal from third detector 13.

In Fig. 10B, the lateral axis represents the rotation angle of third rotation body 10 and the longitudinal axis represents the rotation angle of fifth rotation body 14 calculated based on a signal obtained from fourth detector 16. The teeth number of the gear provided at fourth rotation body 11 is different from the teeth number of the gear provided at fifth rotation body 14. Thus, the rotation cycle of third rotation body 10 is different from the rotation cycle of fourth rotation body 11.

In Fig. 10C, the lateral axis represents the rotation angle of third rotation body 10 and the longitudinal axis represents the difference in the rotation angle between fourth rotation body 11 and fifth rotation body 14 calculated based on a signal obtained from third detector 13 and a signal obtained from fourth detector 16. Line 37 represents a relation between the rotation angle of third rotation body 10 and the rotation angle of fourth rotation body 11.

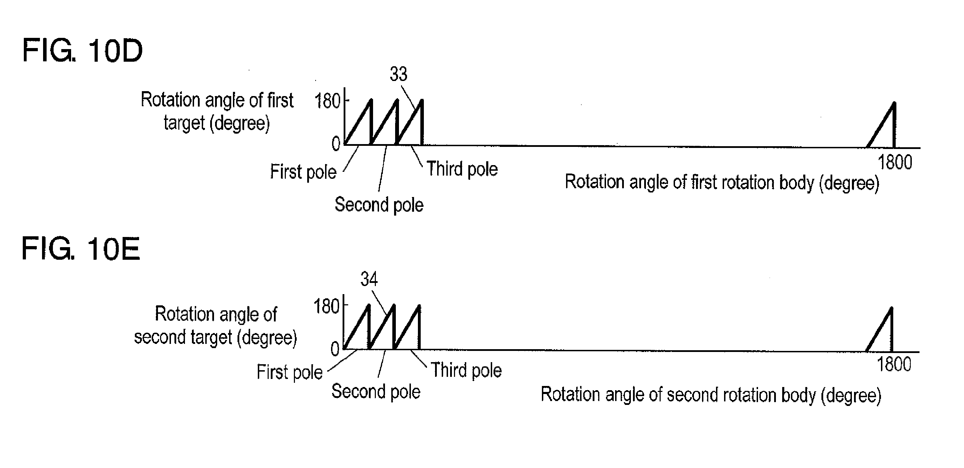

In Fig. 10D, the lateral axis represents the rotation angle of first rotation body 3 engaged with input axis 4 and the longitudinal axis represents the rotation angle of first target 5 calculated based on a signal obtained from first detector 17.

In Fig. 10E, the lateral axis represents the rotation angle of second rotation body 6 engaged with output axis 7 and the longitudinal axis represents the rotation angle of second target 8 calculated based on a signal obtained from second detector 18.

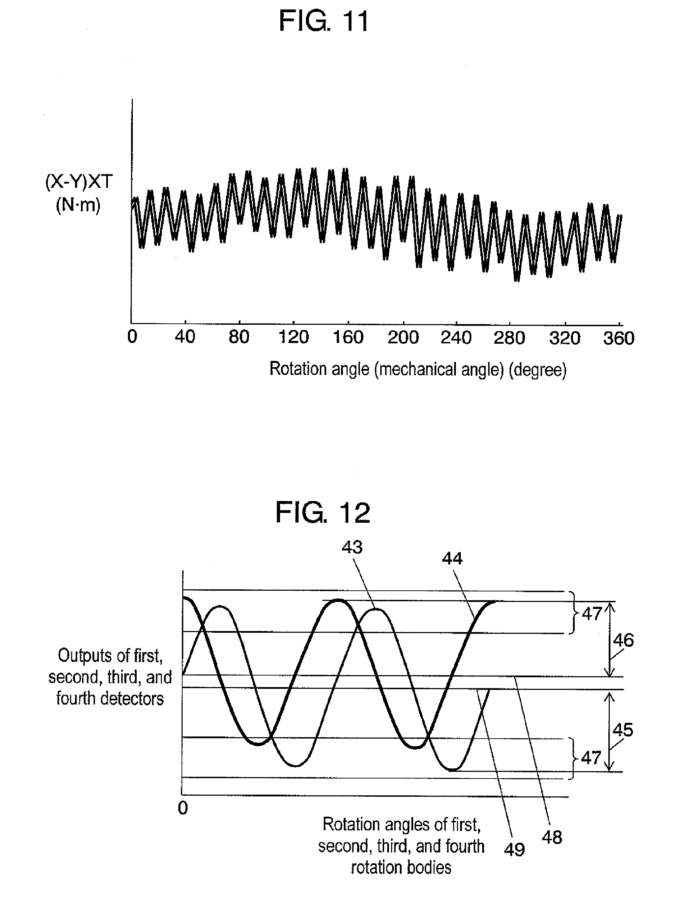

Fig. 11 is a torque detection characteristic diagram in which the lateral axis represents a rotation angle (mechanical angle) of input axis 4 or output axis 7 and the longitudinal axis represents a torque obtained from a torsion angle of torsion bar 9 calculated based on a difference in the rotation angle between first target 5 and second target 8. When assuming that first rotation body 3 has a rotation angle X, second rotation body 6 has a rotation angle Y, and a torsion bar constant is T, a detected torque can calculated based on X-Y)×T.

Next, a method for calculating a torque applied to a torsion bar based on the above configuration will be described.

In Fig. 5A, when input axis 4, torsion bar 9, and output axis 7 constituting an identical rigid body are rotated, first rotation body 3 engaged with input axis 4 is rotated. The rotation of first rotation body 3 causes the rotation of first target 5 retained by first rotation body 3. As a result, first detector 17 senses the direction of the magnetic field of first target 5. It is noted that first target 5 is a multipole ring magnet for example. The sensing output is computed by CPU 23 to calculate the rotation angle of first rotation body 3. Second rotation body 6 engaged with output axis 7 is also rotated. The rotation of this second rotation body 6 causes the rotation of second target 8 retained by second rotation body 6. As a result, second detector 18 positioned to be opposed to second target 8 senses the direction of the magnetic field of second target 8. It is noted that second target 8 is a multipole ring magnet for example. The sensing output is computed by CPU 23 to calculate the rotation angle of second rotation body 6. By calculating a difference between the rotation angle of first rotation body 3 and the rotation angle of second rotation body 6 to multiply the difference with a torsion bar constant, the torque can be calculated. Fig. 10D and Fig. 10E illustrate rotation angles calculated by CPU 23 based on output signals from the respective detectors. Line 33 shows the rotation angle of first target 5 retained by the second rotation body. Line 34 illustrates the rotation angle of second target 8. Fig. 11 illustrates a torque calculated based on the difference between the rotation angles.

Next, a method for detecting a multiple rotation angle of a rotation body will be described.

In Fig. 5A to Fig. 5C, when third rotation body 10 engaged with first rotation body 3 is rotated, fourth rotation body 11 is rotated by the gear of fourth rotation body 11 connected to the gear of third rotation body 10 and fifth rotation body 14 is simultaneously rotated by the gear of fifth rotation body 14 connected to the gear of fourth rotation body 11. It is assumed that the gear of third rotation body 10 has a teeth number "a", the gear of fourth rotation body 11 has a teeth number "b", and the gear of fifth rotation body 14 has a teeth number "c". In this case, fourth rotation body 11 is rotated with a speed a/b times higher or lower than the rotation speed of third rotation body 10. Fifth rotation body 14 is rotated with a speed a/c higher or lower than the rotation speed of third rotation body 10.

By appropriately selecting the gear teeth numbers "a", "b", and "c", the multiple rotation angle of third rotation body 10 can be obtained based on the difference in the rotation angle between fourth rotation body 11 and fifth rotation body 14.

Third detector 13 senses the direction of a magnetic field penetrating third detector 13 to detect the rotation angle of fourth rotation body 11.

Fourth detector 16 on the other hand senses the direction of a magnetic field penetrating fourth detector 16 to sense the rotation angle of fifth rotation body 14. Output signals of third detector 13 and fourth detector 16 are inputted to an A/D converter (not shown) in CPU 23. Based on the difference between the rotation angles calculated based on the output signals from third detector 13 and fourth detector 16, the multiple rotation angle of third rotation body 10 is calculated. Based on this multiple rotation angle, the position of the magnetic pole of first target 5 or second target 8 is estimated to calculate the multiple rotation angle of first target 5 or second target 8 with a high accuracy.

Fig. 10A to Fig. 10E show rotation angles calculated by CPU 23 based on output signals from first detector 17, second detector 18, third detector 13, and fourth detector 16. Line 35 represents the rotation angle of fourth rotation body 11 computed based on the output signal of third detector 13 and line 36 represents the rotation angle of fifth rotation body 14 computed based on the output signal of fourth detector 16, respectively. Rotation angle difference 37 represents a rotation angle difference of fourth and fifth rotation bodies 11 and 14 calculated based on the output signals of third and fourth detectors 13 and 16. Rotation angle difference 37 linearly changes in a rotation detection range from 0 degree to 1800 degrees of third rotation body 10 and in a range of an electric angle from 0 degree to 180 degrees. This means that rotation angle difference 37 can be used to uniquely determine the multiple rotation angle of third rotation body 10 in a rotation detection range from 0 degree to 1800 degrees.

Rotation angle 33 of first target 5 calculated based on the output signal of first detector 17 on the other hand linearly changes in a rotation angle between magnetized poles (12 degrees in this example) and in a range of an electric angle from 0 degree to 180 degrees. This means that rotation angle 33 can be used to uniquely determine the rotation angle of first rotation body 3 retaining first target 5 in the rotation angle between magnetized poles. Third rotation body 10 and first rotation body 3 or second rotation body 6 retaining first target 5 or second target 8 are engaged on an identical axis. Thus, the multiple rotation angle of third rotation body 10 can be used to estimate the position of the magnetic pole of first target 5 or second target 8 to calculate the multiple rotation angle of first target 5 or second target 8 with a high accuracy.

Next, the following section will describe a method for always comparing an absolute rotation angle of first rotation body 3 with an absolute rotation angle of second rotation body 6 to sense an abnormality in the apparatus with reference to Fig. 5A, Fig. 5B, Fig. 5C, Fig. 7A, Fig. 7B, Fig. 10A, Fig. 10B, Fig. 10C, Fig. 10D, and Fig. 10E.

In Fig. 5A, Fig. 5B, and Fig. 5C, the rotation of first rotation body 3 causes the rotation of second rotation body 6 via torsion bar 9. However, a structure in which a torque equal or higher than the maximum torque is prevented from being caused allows, when a difference in the rotation angle between first rotation body 3 and second rotation body 6 is equal to or higher than a specified value, a user to judge an abnormality is caused in the mechanism or in an element circuit. The rotation of first rotation body 3 causes the rotation of first target 5. In accordance with this rotation of first target 5, the magnetic field direction also changes. This change in the magnetic field direction is detected by first detector 17. First detector 17 outputs this change in the magnetic field direction as sinusoidal signal 24 and cosine signal 25.

Fig. 7A shows these output signals. The lateral axis shows the respective signals based on rotation angles of first rotation body 3. These signals are inputted via amplifier 21 to CPU 23. Then, an arctangent signal is calculated based on sinusoidal signal 24 and cosine signal 25 to calculate the rotation angle of first rotation body 3.

Similarly, the rotation of second rotation body 6 causes the rotation of second target 8. In accordance with this rotation of second target 8, the magnetic field direction also changes. This change in the magnetic field direction is detected by second detector 18. Second detector 18 outputs this change in the magnetic field direction as sinusoidal signal 24 and cosine signal 25. Fig. 7A also shows these output signals. The lateral axis shows the respective signals based on rotation angles of second rotation body 6. These signals are inputted via amplifier 22 to CPU 23. CPU 23 calculates an arctangent signal based on sinusoidal signal 24 and cosine signal 25 to calculate the rotation angle of second rotation body 6. In Fig. 10D and Fig. 10E, a value of a difference between rotation angle 33 of first rotation body 3 (i.e., first target 5) and the rotation angle of second rotation body 6 (i.e., second target 8) is equal to or lower than a specified value so long as the rotation angles have an identical origin.

Next, a method for always comparing the rotation angle of first rotation body 3 with the rotation angle of fourth rotation body 11 to sense an abnormality in the apparatus will be described with reference to Fig. 5A, Fig. 5B, Fig. 5C, Fig. 7A, Fig. 7B, Fig. 8A, Fig. 8B, Fig. 10A, Fig. 10B, Fig. 10C, Fig. 10D, and Fig. 10E.

In Fig. 5A, Fig. 5B, and Fig. 5C, the rotation of first rotation body 3 causes the rotation of first target 5 retained by first rotation body 3. When thirty poles are magnetized at the surface of first target 5, an output signal as shown in Fig. 7A is outputted from first detector 17. Whenever first rotation body 3 is rotated 12 degrees, sinusoidal signal 24 and cosine signal 25 change by one cycle and an electric angle calculated based on these signals changes by 180 degrees. Specifically, the rotation angle of first rotation body 3 can be uniquely obtained in the range of 12 degrees. When assuming that a teeth number ratio between the gear of third rotation body 10 and the gear of fourth rotation body 11 is 1:3, the rotation of 60 degrees of third rotation body 10 always causes the change of sinusoidal signal 26 and cosine signal 27 by one cycle as shown in Fig. 8A. An electric angle calculated based on these signals changes by 180 degrees. In Fig. 10A, Fig. 10B, Fig. 10C, Fig. 10D, and Fig. 10E, by correcting a gradient of rotation angle 33 and rotation angle 35 from a certain rotation angle as an origin based on a rotation angle ratio for one cycle (12:60=1:5), a difference between rotation angle 33 of first target 5 calculated by first detector 17 and rotation angle 35 of fourth rotation body 11 calculated by third detector 13 is equal to or lower than a specified value so long as the apparatus has no abnormality. Specifically, a difference between a value obtained by multiplying the value of rotation angle 35 with five and rotation angle 33 is calculated to determine an abnormality.

Next, the following section will describe a method for preventing an error in rotation detection due to the dispersion in sensitivities of first detector 17, second detector 18, third detector 13, fourth detector 16, amplifier 21, amplifier 22, amplifier 30, and amplifier 31 for example with reference to Fig. 5A, Fig. 5B, Fig. 5C, Fig. 6, Fig. 7A, Fig. 7B, Fig. 8A, Fig. 8B, Fig. 9A, Fig. 9B, and Fig. 12.

In Fig. 5A, Fig. 5B, and Fig. 5C, the rotation of first rotation body 3 causes the rotation of first target 5. This rotation of first target 5 causes a change in the magnetic field direction. This change in the magnetic field direction is detected by first detector 17. First detector 17 outputs this change in the magnetic field direction as sinusoidal signal 24 and cosine signal 25. These output signals are shown in Fig. 7A in which the lateral axis shows rotation angles of first rotation body 3 to show the respective rotation angles. These signals are inputted via amplifier 21 to CPU 23. CPU 23 calculates an arctangent signal based on sinusoidal signal 24 and cosine signal 25. However, when sinusoidal signal level 45 is minutely different from cosine signal level 46 due to the dispersion of sensitivities of magnetic detecting elements or amplifiers as shown in Fig. 12, a calculated arctangent signal has a deteriorated accuracy. To prevent this, first rotation body 3 is rotated 12 degrees or more only when switch signal 50 shown in Fig. 6 is turned ON to start a sensitivity storing mode and signal level 45 and signal level 46 of sinusoidal signal 44 and cosine signal 43 are calculated by CPU 23 and are stored in non-volatile memory 51. Non-volatile memory 51 is composed of EEPROM for example. Hereinafter, non-volatile memory 51 will be called as EEPROM 51. A signal level of second detector 18 is also stored in EEPROM 51. Switch signal 50 is turned OFF when a rotation angle is calculated and sinusoidal signal 44 and cosine signal 43 are corrected, based on stored signal level 45 and signal level 46, to have identical maximum and minimum levels to calculate an arctangent signal to calculate a rotation angle.

Third rotation body 10 is rotated so that fourth rotation body 11 and fifth rotation body 14 shown in Fig. 5A, Fig. 5B, and Fig. 5C are rotated by an angle equal to or higher than 180 degrees to calculate signal levels of sinusoidal signals 26 and 28 as well as cosine signals 27 and 29 shown Fig. 8A, Fig. 8B, Fig. 9A, and Fig. 9B. The calculated signal levels are stored in EEPROM 51. Based on stored signal levels 45 and 46, sinusoidal signal 44 and cosine signal 43 are corrected to have identical maximum and minimum levels to calculate an arctangent signal to calculate a rotation angle as shown in Fig. 13. It is noted that signal levels 45 and 46 also may be assumed as representing sensitivity.

When the maximum and minimum values of outputs of first detector 17, second detector 18, third detector 13, and fourth detector 16 of Fig. 12 are not within reference range 47, an output may not change depending on a temperature characteristic for example or a required resolution may not be obtained. Thus, an increased error in the detection of a rotation angle can be prevented by checking that the output has the maximum value and the minimum value within reference range 47. An increased error in a calculated rotation angle also can be prevented by comparing and checking amplitude centers 48 and 49 of outputs of first detector 17, second detector 18, third detector 13, and fourth detector 16 to check whether amplitude centers 48 and 49 are within a certain range or not. Detection of a rotation angle with a further higher accuracy also can be performed by taking a plurality of inputs to calculate an average value or an average value except for the maximum value or the minimum value for example.

By storing signal outputs of first detector 17, second detector 18, third detector 13, and fourth detector 16 at an arbitrary specific position or a rotation angle calculated based on these signal outputs, a rotation angle from the arbitrary position also can be uniquely detected. By storing these values while no torque being applied, the origin of torque also can be set. By using specific position determination signal line 52 of Fig. 6 for example to send an electric signal showing a specific position, the specific position can be determined without a mechanical operation. Alternatively, by reading and checking an electric signal a plurality of times or by sending a serial signal for example, a wrong signal caused by noise for example can be removed. It is noted that specific position determination signal line 52 can be provided by switching an input or output of output signal line 32 to use an identical terminal.

The above section has described that rotation angles calculated by first detector 17 and second detector 18 are used to check whether the difference in the rotation angle is within a specific value range or not. The above section also has described that rotation angles calculated and corrected by first detector 17 and second detector 18 are always compared with rotation angles calculated and corrected by third detector 13 and fourth detector 16 to check whether the difference in the rotation angle is within a specific value range or not. The above section also has described that, when sensitivities of first detector 17, second detector 18, third detector 13, and fourth detector 16 are stored, whether the sensitivities are within a specific value range or not is checked. The above section also has described that the centers of amplitudes of signal outputs of first detector 17, second detector 18, third detector 13, and fourth detector 16 are within a specific value range or not. This check is performed by a check section in an embodiment of the present invention. In the embodiment of the present invention, this check section is exemplarily provided by CPU 23.

The above section also has described that non-volatile memory 51 (EEPROM 51) is provided to memorize sensitivities of sinusoidal signals and cosine signals outputted from first detector 17, second detector 18, third detector 13, and fourth detector 16 to subject the respective sensitivities to the correction of sinusoidal signals and cosine signals. The above section also has described that non-volatile memory 51 (EEPROM 51) is provided to memorize the centers of amplitudes of signal outputs of first detector 17, second detector 18, third detector 13, and fourth detector 16 to subject the respective amplitude centers to the correction of sinusoidal signals and cosine signals. These corrections also can be performed whenever a power source is turned ON.

The above section also has described that arbitrary specific positions of first detector 17, second detector 18, third detector 13, and fourth detector 16 are determined to memorize values of sinusoidal signals and cosine signals at specific positions to detect absolute rotation angles from specific positions. This determination is performed by a determination section. In the embodiment of the present invention, this determination section for performing this determination is exemplarily provided by CPU 23.

### INDUSTRIALAPPLICABILITY

The rotation angle and torque detection apparatus of the present invention is composed of a power steering of a vehicle for example and can accurately sense a torque and a multiple rotation angle by a simple structure.

## Claims

1. A rotation angle and torque detection apparatus comprising:
a target having magnetic poles magnetized at an outer circumference face so that the magnetic poles have alternately-different polarities and the target can be rotated multiple times; and
a detector that is positioned to have a fixed distance from the target in a radial direction of the target and to have a fixed distance from a center of the target in an axial direction and that is provided at a plane vertical to the radial direction of the target.

2. A rotation angle and torque detection apparatus comprising:
a first target having magnetic poles magnetized at an outer circumference face so that the magnetic poles have alternately-different polarities and the first target can be rotated multiple times;
a first rotation body that is engaged with and connected to at least one of an input axis and an output axis, that retains the first target, and that can be rotated multiple times;
a first detector that is provided to have a fixed distance to the first target in a radial direction of the first target and to have a fixed distance from a center of the first target in an axial direction of the first target and that is provided at a plane vertical to a radial direction of the first target;
a second target having magnetic poles magnetized at an outer circumference face so that the magnetic poles have alternately-different polarities and the second target can be rotated multiple times;
a second rotation body that is engaged with and connected to the first detector and at least one of the output axis and the input axis, that retains the second target, and that can be rotated multiple times;
a second detector that is provided to have a fixed distance in a radial direction of the second target and to have a fixed distance from the center of the second target in an axial direction of the second target and that is provided at a plane vertical to a radial direction of the second target;
a third rotation body that is engaged with and connected to at least one of the input axis and the output axis and that has a gear;
a third target that is magnetized and that can be rotated multiple times;
a fourth rotation body that is provided at the gear of the third rotation body, that has the third target at its center, and that has a gear;
a third detector for detecting a rotation angle of the fourth rotation body;
a fourth target that is magnetized and that can be rotated multiple times;
a fifth rotation body that is connected to a gear of the fourth rotation body, that has the fourth target at the center, and that has a gear; and
a fourth detector for detecting a rotation angle of the fifth rotation body.

3. The rotation angle and torque detection apparatus according to Claim 2, wherein:
the first target and the second target have an identical number of magnetized poles,
the first detection means and the second detection means detect a rotation angle of the first rotation body and a rotation angle of the second rotation body as a change in a magnetic field direction of the first target and a change in a magnetic field direction of the second target so that a torque is calculated based on a difference in the rotation angle between the first rotation body and the second rotation body.

4. The rotation angle and torque detection apparatus according to Claim 2, wherein:
each of the first detector, the second detector, the third detector, and the fourth detector is formed of a magnetic detecting element,
each of the third target and the fourth target is formed of a monopolar magnet.

5. The rotation angle and torque detection apparatus according to Claim 2, wherein:
the fourth rotation body has a teeth number different from a teeth number of the fifth rotation body,
a difference in the rotation angle between the fourth rotation body and the fifth rotation body is combined with rotation angles of the fourth rotation body to the fifth rotation body to calculate a multiple rotation angle of the third rotation body.

6. The rotation angle and torque detection apparatus according to Claim 2, wherein:
the fourth rotation body has a teeth number different from a teeth number of the fifth rotation body, and
a difference in the rotation angle between the fourth rotation body and the fifth rotation body, rotation angles of the fourth rotation body to the fifth rotation body, and a rotation angle of the first rotation body calculated by the first target are combined to calculate a multiple rotation angle of the first rotation body.

7. The rotation angle and torque detection apparatus according to Claim 2, further comprising:
a torsion bar provided between the input axis and the output axis.

8. The rotation angle and torque detection apparatus according to Claim 2, further comprising:
a check section that always compares rotation angles calculated by the first detector and the second detector to check whether a difference between the rotation angles is within a specific value range or not.

9. The rotation angle and torque detection apparatus according to Claim 2, further comprising:
a check section that always compares rotation angles calculated and corrected by the first detector and the second detector with rotation angles calculated and corrected by the third detector and the fourth detector to check whether a difference among the rotation angles is within a specific value range or not.

10. The rotation angle and torque detection apparatus according to Claim 2, further comprising:
a non-volatile memory that stores sensitivities of sinusoidal signals and cosine signals outputted from the first detector, the second detector, the third detector, and the fourth detector so that the sinusoidal signals and the cosine signals are corrected at the respective sensitivities when a power source is turned ON.

11. The rotation angle and torque detection apparatus according to Claim 10, further comprising:
a check section that checks whether the sensitivities are within a specific value range or not when the sensitivities are stored.

12. The rotation angle and torque detection apparatus according to Claim 2 comprising:
a non-volatile memory that stores centers of amplitudes of output signals of the first detector, the second detector, the third detector,
wherein the fourth detector and the output signals are corrected at the respective centers of amplitudes when a power source is turned ON.

13. The rotation angle and torque detection apparatus according to Claim 2, further comprising:
a check section that checks whether centers of amplitudes of output signals of the first detector, the second detector, the third detector, and the fourth detector are within a specific value range or not.

14. The rotation angle and torque detection apparatus according to Claim 2, further comprising:
a determination section that determines certain positions of the first detector, the second detector, the third detector, and the fourth detector,
wherein:
values of the first detector, the second detector, the third detector, and the fourth detector at the certain position are stored to detect an absolute rotation angle from the certain position.

15. The rotation angle and torque detection apparatus according to Claim 14, wherein:
an absolute rotation angle calculated based on a sinusoidal signal and a cosine signal at the certain position is stored to detect an absolute rotation angle from the certain position.
